# EUROPEAN PATENT SPECIFICATION

(11) **EP 0 545 649 B1**
(45) Date of publication and mention of the grant of the patent: **31.07.1996**
(21) Application number: 92310893.0
(22) Date of filing: 30.11.1992
(51) Int. Cl.: B32B 27/32

(54) **Polymeric films**
Kunststoffolien
Films polymères

(30) Priority: 03.12.1991 GB 9125643
(43) Date of publication of application: 09.06.1993
(73) Proprietor: COURTAULDS FILMS (HOLDINGS) LIMITED, Bridgwater Somerset TA6 4PA (GB)
(72) Inventor: Crighton, Allan John, Highbridge, Somerset (GB); Dean, Darren William, Swindon, Wiltshire SN2 3SH (GB)
(74) Representative: Claisse, John Anthony, Dr.

(56) References cited:
- EP-A- 0 161 035
- EP-A- 0 180 087
- EP-A- 0 312 226
- EP-A- 0 338 402
- EP-A- 0 420 114
- EP-A- 0 545 650
- GB-A- 1 391 446

## Description

This invention concerns polymeric films, and especially polymeric films which provide a barrier to light.

Films which provide a barrier to light are in particular demand for packaging purposes, since light can adversely affect packaged products even when those products are sealed in the films, for example in a controlled atmosphere. High light barrier properties are therefore required for such end uses, and typically this has been provided by the use of metal layers, for example of aluminium, within a multi-layer film structure. Although the inclusion of a metal layer can provide a satisfactory light barrier, it necessitates a number of processing steps including metallization which is usually effected under vacuum. This increases the cost of the film. Furthermore, although it is often possible to reprocess waste polymeric film by regranulation and then adding the granules produced back to one of the layers of the film, this is unsatisfactory with metallized films. This therefore adds a further financial cost to such barrier films.

It is possible to impart light barrier to polymeric films by the inclusion of fillers within the films. Such films can be reprocessed, but their light barrier properties are usually poor. Increasing the amount of filler increases the barrier to light, but there is a practical limit to the amount of filler which can be added to a film without seriously affecting the physical strength of the film. Acceptable filler loadings generally result in films with relatively poor light barrier properties at conventional film thicknesses, for example of about 35µm. Increased film thickness will increase the light barrier properties, but with the additional cost of the use of more polymer. Furthermore, in many applications of such films it is not possible to accept increased film thicknesses.

EP 0338402-A describes a multilayer polymeric film consisting of a core layer of a polyolefin containing talc, an intermediate layer on each surface of the core layer, each intermediate layer consisting of a polyolefin and a filler, and an outer layer of a heat sealable polymer on each surface of the intermediate layer remote from the core layer.

According to the present invention there is a provided biaxially stretched multi-layer polymeric film comprising
(a) a core layer comprising a polyolefin and carbon black;
(b) an intermediate layer bonded to each surface of the core layer, each intermediate layer comprising a polyolefin, a titanium dioxide pigment of a particle size such that it acts as a pigment rather than as a voiding agent and a voiding agent; and
(c) an outer layer bonded to each surface of the intermediate layer remote from the core layer, the outer layer comprising a heat sealable polymer, at least one of the outer layers containing titanium dioxide as a pigment.

Films of the present invention have shown a very high degree of light barrier, for example films of about 35µm total thickness have shown an optical density of greater than 1 unit as measured by a Tobias TCX Densitometer, and an ultra violet transmission of less than 5 percent in the wavelength range of 200 to 700 nm. In addition, these films have shown unexpectedly low water vapor transmission rates 4.0g/m²/day or less as measured by ASTM F1249 (89). This can be achieved without the need for metallizing.

Waste film can be regranulated and added to the core layer, thereby providing a particularly economic film production process.

The polyolefin of the core layer is preferably of a propylene homopolymer. However, the core layer can include recycled polyolefin which will often include other polymeric materials. The polyolefin of the core layer can consist entirely of recycled polyolefin, although lesser amounts will usually be used, for example up to 75 percent by weight or preferably up to 50 percent by weight of the core. It is generally preferred that the core layer should contain up to 30 percent of recycled polyolefin but 25 percent by weight or less of recycled polyolefin can be used. Although the recycled polyolefin can be recycled film of the present invention, it can be from other sources, although it is preferably substantially polypropylene.

The amount of carbon black present in the core layer is preferably from 1 to 10 percent by weight of the core layer, about 2 percent being particularly preferred.

The core layer can additionally include one or more processing aids, for example slip and antiblock agents.

The polyolefin of the intermediate layers is preferably a propylene homopolymer or high density polyethylene. These layers also include a titanium dioxide pigment and a voiding agent. Examples of voiding agents which can be used include titanium dioxide, calcium carbonate and barium sulfate. As is known in the art, the ability of such materials to act as a voiding agent rather than a pigment usually depends on the particular size of the material.

Voiding necessitates that the films should be at least mono-axially stretched, and usually biaxially stretched, and the voiding agent will then usually have a mean particle size of from 1 to 10µm. As will be appreciated by those skilled in the art, films of the present invention can be mono- or biaxiallly stretched without voiding if the pigment has a particle size below the critical size necessary to effect voiding. This is usually below about 1µm.

It is, however, generally preferred that the core layer should not be voided.

The amount of pigment and/or voiding agent present in the intermediate layers is preferably from 5 to 30 percent by weight of these layers, and particularly preferred at about 20 percent.

The intermediate layers can include film processing aids, for example one or more slip, antiblock or antistatic agents.

In a particularly preferred embodiment of the present invention, one or both of the intermediate layers contain a hydrogenated hydrocarbon resin, for example as described in British Patent Specification 1231861. The presence of a hydrogenated hydrocarbon resin in at least one of the intermediate layers has provided films of the present invention with an improved barrier to water vapor. Typically, the intermediate layer can contain up to 30 percent by weight of hydrogenated hydrocarbon resin, it generally being preferred to include at least 10 percent by weight of hydrogenated hydrocarbon resin in order to provide an improved barrier to water vapor. It is, however, particularly preferred to include about 25 percent by weight of hydrogenated hydrocarbon resin for this purpose.

Hydrogenated polyterpene resins are particularly preferred hydrogenated hydrocarbon resins for this purpose.

Although it is particularly preferred that one or both of the intermediate layers should contain a hydrogenated hydrocarbon resin, it should be appreciated that any of the layers of films of the present invention can contain resins for the purpose of providing an improved barrier to water vapor. Thus a hydrogenated hydrocarbon resin can be in the core layer and/or either of the outside layers, this being additional to or instead of the hydrogenated hydrocarbon resin in the intermediate layers.

The heat sealable polymer of the outer layers is preferably a copolymer consisting of units derived from two or more of ethylene, propylene, and but-1-ene, for example a propylene/ethylene copolymer or a terpolymer containing units derived from ethylene, propylene and but-1-ene.

One or both of the outer layers preferably contain a pigment, for example titanium dioxide, calcium carbonate or barium sulfate. Although these pigments are also preferred for the intermediate layers, where they can effect voiding, they generally do not give rise to voiding of the outer layers under conditions which effect voiding of the intermediate layers due to the different nature of the polymers used for the outer and intermediate layers.

The amount of pigment present in the outer layers is preferably from 5 to 20 percent by weight of the layers and especially about 15 percent.

The outer layers can also include film processing aids, for example one or more slip, antiblock or antistatic agents.

Films of the present invention can be produced by known methods. However, it is generally preferred to coextrude the five layers to produce a five-layer film, this usually being effected using masterbatches of the respective polymers and pigments or voiding agents. After coextrusion, the resulting film is preferably stretched, the stretching preferably being biaxial. Biaxial stretching is preferably effected sequentially, for example using heated rollers to effect stretching in the direction of film extrusion followed by stretching in the transverse direction in a stenter oven.

Films of the present invention will usually be from 20 to 60µm thick, and preferably about 35µm thick. The various layers making up the five-layer structure of films of the present invention will usually be such that the core layer is thickest with the outer layer being thinnest, the intermediate layers therefore usually being of intermediate thickness. The core layer will usually be from 10 to 40µm thick, and preferably from 15 to 20µm thick. The intermediate layers will usually be from 1 to 10µm thick, and preferably from 6 to 8µm thick. The outer layers will usually be from 0.8 to 5.0µm thick and preferably about 1.5µm thick.

If desired, either or both outer surface of the outer layers can be treated to increase their surface energy, for example up to 50 mNm⁻¹, this being achieved, for example, by corona discharge treatment or flame treatment.

The outer surfaces of films of the present invention can also be modified by the application of a coating composition, for example of an acrylic polymer, e.g. to enhance printability.

The following Examples are given by way of illustration only. All percentages are by weight unless stated otherwise.

### Example 1

A flat five layer polymer web was produced by coextruding through a slot die a central core layer of propylene homopolymer containing 3 percent by weight of carbon black (average particle size less than 0.2µm), intermediate layers of the same propylene homopolymer as the core layer on either side of the core layer, without the carbon black but each including 20 percent by weight of titanium dioxide (average particle size less than 0.2µm) and 10 percent by weight of chalk (average particle size 3.5µm), and a layer of a propylene/ethylene copolymer (containing 4 percent by weight of units derived from ethylene) on each intermediate layer, one of the outer layers containing 15 percent by weight of titanium dioxide (average particle size less than 0.2µm).

The resulting web was then stretched 4.5 times in the direction of extrusion by passing it over rollers heated to 120°C, and thereafter it was stretched 10 times in a direction transverse to the direction of extrusion in a stenter oven at 156°C.

The stretched film, which had voided intermediate layers as a result of the presence of the chalk in the intermediate layers and the stretching, had a total thickness of 35µm, with the intermediate layers each being 5µm thick and the outer layer containing the titanium dioxide being 2µm thick and the other outer layer being 3.5µm thick.

This film had an optical density of 2.8 as measured by a Tobias TCX Densitometer, and an ultra violet transmission rate of less than 1.0 percent in the wavelength range of 200 to 700 nm. The water vapor transmission rate of the film was 6.0g/m²/day as measured by ASTM F1249 (89), and its density was 0.71g/cm³.

### Comparison Example A

A biaxially stretched film was produced as described in Example 1, except that the two intermediate layers each contained 20 percent by weight of titanium dioxide, but no chalk.

The film had an optical density of 2.9 and an ultraviolet transmission rate of less than 1 percent, both parameters being determined as in Example 1. The water vapor transmission rate of this film was 3.5g/m²/day (ASTM F1249 (89)) and its density was 0.95g/cm³.

### Comparison Example B

A biaxially stretched film was produced as described in Example 1, except that the two intermediate layers each contained 20 percent by weight of titanium dioxide and 25 percent by weight of a hydrogenated polyterpene, but no chalk.

The film had an optical density of 3.2 and an ultraviolet transmission rate of less than 0.5 percent, both parameters being determined as in Example 1. The water vapor transmission rate of this film was 3.0g/m²/day (ASTM F1249 (89)) and its density was 0.93g/cm³.

### Comparison Example C

A biaxially stretched film was produced as described in Example 1, except that the two intermediate layers contained no carbon black, chalk or titanium dioxide.

The film had an optical density of 2.0 and an ultraviolet transmission rate of less than 4 percent, both parameters being determined as in Example 1. The water vapor transmission rate of this film was 3.9/m²/day (ASTM F1249 (89)) and it had a density of 0.89g/cm³.

### Comparison Example D

A three-layer biaxially stretched film 35µm thick was produced according to the method of Example 1 but omitting the two intermediate layers. The core layer, however, consisted of polypropylene homopolymer without any pigment or voiding agent. The heat seal layers were each 0.8µm thick.

This film had an ultra violet transmission rate of greater than 90 percent in the wavelength range of 250 to 700nm. The water vapor transmission rate of the film was 4.1g/m²/day as measured by ASTM F1249 (89), and its density was 0.91g/cm³. The optical density of the film was not measured as it was transparent.

### Comparison Example E

A three-layer biaxially stretched film 35µm thick was produced as described in Comparison Example D but with heat seal layers 1.5µm thick and with the inclusion in the core layer of about 5 percent by weight of chalk having a mean particle size of about 3.5µm. The resulting film had a voided core layer.

This film had an optical density of 0.34, and an ultra violet transmission rate of greater than 45 percent, both parameters being determined as in Example 1, with the ultra violet transmission being measured in the range of from 250 to 700 nm. The water vapor transmission of the film was 5.2g/m²/day (ASTM F1249 (89)) and its density was 0.69g/cm³.

### Comparison Example F

A three-layer biaxially oriented film 35µm thick was produced as in Comparison Example D, but with the inclusion of titanium dioxide (mean particle size less than 0.2µm) in the core which was not voided. The heat seal layers were each 0.8µm thick.

This film had an optical density of 0.60 and an ultraviolet transmission rate of greater than 10 percent, both parameters being determined as in Example 1, with the ultra violet transmission being measured in the range from 400 to 700nm. The water vapor transmission rate of this film was 4.7g/m²/day (ASTM F1249 (89)) and its density was 0.97g/cm³.

A comparison of the physical properties of the exemplified film of the present invention and those of the Comparison Examples D to F shows that the films of the present invention have high opacity to optical and ultra violet light, combined with low water vapor transmission rates.

## Claims

1. A biaxially stretched multi-layer polymeric film comprising
(a) a core layer comprising a polyolefin and carbon black;
(b) an intermediate layer bonded to each surface of the core layer, each intermediate layer comprising a polyolefin, a titanium dioxide pigment of a particle size such that it acts as pigment rather than as a voiding agent, and a voiding agent; and
(c) an outer layer bonded to each surface of the intermediate layer remote from the core layer, the outer layer comprising a heat sealable polymer, at least one of the outer layers containing titanium dioxide as a pigment.

2. A film according to claim 1, wherein the polyolefin of the core layer comprises polypropylene.

3. A film according to either of the preceding claims, wherein the polyolefin of the core comprises up to 100 percent of recycled polyolefin.

4. A film according to claim 3, wherein the polyolefin of the core comprises up to 75 percent of recycled polyolefin, for example up to 50 percent.

5. A film according to claim 4, wherein the polyolefin of the core comprises up to 30 percent by weight of recycled polyolefin.

6. A film according to claim 5, wherein the core includes up to 25 percent by weight of recycled polyolefin.

7. A film according to any of the preceding claims, wherein the polyolefin of the intermediate layers comprises polypropylene or high density polyethylene.

8. A film according to any of the preceding claims, wherein the voiding agent of the intermediate layer comprises titanium dioxide, calcium carbonate or barium sulfate.

9. A film according to any of the preceding claims, wherein the heat sealable polymer of the outer layer comprises a polymer containing units derived from at least two of ethylene, propylene and but-1-ene.

10. A film according to any of the preceding claims, wherein the intermediate layer includes a hydrogenated hydrocarbon resin.

11. A film according to claim 10, wherein the hydrogenated hydrocarbon resin comprises a hydrogenated polyterpene.

12. A film according to any of the preceding claims, wherein at least one of the intermediate layers is voided.

13. A film according to any of the preceding claims, which has been surface treated to increase its surface energy.

14. A film according to any of the preceding claims, including a surface coating of an acrylic polymer.

## Patentansprüche

1. Biaxial verstreckter, mehrschichtiger Polymerfilm gekennzeichnet durch
(a) eine ein Polyolefin und Ruß enthaltende Innenschicht;
(b) jeweils eine mit jeder Oberfläche der Innenschicht verbundene Zwischenschicht, wobei jede Zwischenschicht ein Polyolefin, ein Titandioxidpigment solcher Partikelgröße, daß es eher als Pigment denn als Porenbildner wirkt, und einen Porenbildner umfaßt und
(c) jeweils eine mit jeder Zwischenschicht auf der an die Innenschicht nicht angrenzenden Seite verbundenen Außenschicht, die ein heißsiegelbares Polymer aufweist, wobei wenigstens eine der Außenschichten Titandioxid als ein Pigment enthält.

2. Film nach Anspruch 1, **dadurch gekennzeichnet**, daß das Polyolefin der Innenschicht Polypropylen enthält.

3. Film nach einem der vorhergehenden Ansprüche, **dadurch gekennzeichnet**, daß das Polyolefin der Innenschicht bis zu 100 Prozent Recycling-Polyolefin enthält.

4. Film nach Anspruch 3, **dadurch gekennzeichnet**, daß das Polyolefin der Innenschicht bis zu 75 Prozent, beispielsweise bis zu 50 Prozent Recycling-Polyolefin enthält.

5. Film nach Anspruch 4, **dadurch gekennzeichnet**, daß das Polyolefin der Innenschicht bis zu 30 Gewichtsprozent Recycling-Polyolefin enthält.

6. Film nach Anspruch 5, **dadurch gekennzeichnet**, daß die Innenschicht bis zu 25 Gewichtsprozent Recycling-Polyolefin enthält.

7. Film nach einem der vorhergehenden Ansprüche, dadurch **gekennzeichnet**, daß das Polyolefin der Zwischenschichten Polypropylen oder Polyethylen hoher Dichte enthält.

8. Film nach einem der vorhergehenden Ansprüche, **dadurch gekennzeichnet**, daß das porenbildende Mittel der Zwischenschicht Titandioxid, Calciumcarbonat oder Bariumsulfat umfaßt.

9. Film nach einem der vorhergehenden Ansprüche, **dadurch gekennzeichnet**, daß das heißsiegelbare Polymer der Außenschicht ein Polymer umfaßt, das Einheiten enthält, die sich von mindestens zwei Stoffen der Verbindungen Ethylen, Propylen und But-1-en herleiten.

10. Film nach einem der vorhergehenden Ansprüche, **dadurch gekennzeichnet**, daß die Zwischenschicht ein hydriertes Kohlenwasserstoffharz umfaßt.

11. Film nach Anspruch 10, **dadurch gekennzeichnet**, daß das hydrierte Kohlenwasserstoffharz ein hydriertes Polyterpen umfaßt.

12. Film nach einem der vorhergehenden Ansprüche, **dadurch gekennzeichnet**, daß wenigsten eine der Zwischenschichten Poren aufweist.

13. Film nach einem der vorhergehenden Ansprüche, **dadurch gekennzeichnet**, daß er zur Vergrößerung seiner Oberflächenenergie einer Oberflächenbehandlung unterworfen worden ist.

14. Film nach einem der vorhergehenden Ansprüche, **dadurch gekennzeichnet**, daß er eine Acrylpolymer-Oberflächenbeschichtung aufweist.

## Revendications

1. Film polymère multicouche étiré biaxialement, comprenant :
(a) une couche de coeur comprenant une polyoléfine et du noir de carbone ;
(b) une couche intermédiaire liée à chaque surface de la couche de coeur, chaque couche intermédiaire comprenant une polyoléfine, un pigment de dioxyde de titane d'une dimension de particule telle qu'il joue le rôle de pigment plutôt que d'un agent de formation de vides, et un agent de formation de vides ; et
(c) une couche externe liée à chaque surface de la couche intermédiaire à l'opposé de la couche de coeur, la couche externe comprenant un polymère thermoscellable, au moins l'une des couches externes contenant du dioxyde de titane comme pigment.

2. Film selon la revendication 1, dans lequel la polyoléfine de la couche de coeur comprend du polypropylène.

3. Film selon l'une des revendications précédentes, dans lequel la polyoléfine du coeur comprend jusqu'à 100 pour cent de polyoléfine recyclée.

4. Film selon la revendication 3, dans lequel la polyoléfine du coeur comprend jusqu'à 75 pour cent de polyoléfine recyclée, par exemple jusqu'à 50 pour cent.

5. Film selon la revendication 4, dans lequel la polyoléfine du coeur comprend jusqu'à 30 pour cent en poids de polyoléfine recyclée.

6. Film selon la revendication 5, dans lequel le coeur comprend jusqu'à 25 pour cent en poids de polyoléfine recyclée.

7. Film selon l'une des revendications précédentes, dans lequel la polyoléfine des couches intermédiaires comprend du polypropylène ou du polyéthylène haute densité.

8. Film selon l'une des revendications précédentes, dans lequel l'agent de formation de vides de la couche intermédiaire comprend du dioxyde de titane, du carbonate de calcium ou du sulfate de baryum.

9. Film selon l'une des revendications précédentes, dans lequel le polymère thermoscellable de la couche externe comprend un polymère contenant des unités provenant d'au moins deux parmi l'éthylène, le propylène et le butène-1.

10. Film selon l'une des revendications précédentes, dans lequel la couche intermédiaire comprend une résine d'hydrocarbure hydrogéné.

11. Film selon la revendication 10, dans lequel la résine d'hydrocarbure hydrogéné comprend un polyterpène hydrogéné.

12. Film selon l'une des revendications précédentes, dans lequel des vides ont été formés dans au moins l'une des couches intermédiaires.

13. Film selon l'une des revendications précédentes, qui a été traité en surface pour augmenter son énergie superficielle.

14. Film selon l'une des revendications précédentes, comprenant un revêtement de surface en un polymère acrylique.
